# EUROPÄISCHE PATENTSCHRIFT

(11) **EP 2 318 468 B1**
(45) Veröffentlichungstag und Bekanntmachung des Hinweises auf die Patenterteilung: **04.01.2012**
(21) Anmeldenummer: 09777344.4
(22) Anmeldetag: 21.07.2009
(51) Int. Cl.: C09K 3/14

(54) **GESINTERTE SCHLEIFKORNAGGLOMERATE**
SINTERED ABRASIVE GRIT AGGLOMERATES
AGGLOMÉRATS DE GRAINS ABRASIFS FRITTÉS

(30) Priorität: 30.07.2008 DE 102008035515
(43) Veröffentlichungstag der Anmeldung: 11.05.2011
(73) Patentinhaber: Center for Abrasives and Refractories Research & Development C.A.R.R.D. GmbH, 9524 Villach (AT)
(72) Erfinder: DIDAVIDE, Maria Christina, 6260 Reiden (CH); KUNZ, Reiner, DE-79725 Laufenburg (DE)
(74) Vertreter: Patentanwälte Westphal, Mussgnug & Partner
(86) Internationale Anmeldenummer: PCT/EP2009/005296
(87) Internationale Veröffentlichungsnummer: WO 2010/012405

(56) Entgegenhaltungen:
- EP-A- 0 725 045
- DE-A1-102005 033 392
- DE-B4- 10 392 532

## Beschreibung

Die vorliegende Erfindung betrifft gesinterte Schleifkornagglomerate mit einem Anteil an Aluminiumoxid von mindestens 80 Gew. %, einem mittleren Primärteilchendurchmesser von weniger als 5 µm, einer im Wesentlichen sphärischen Außenkontur, einem Anteil an Poren von mindestens 15 Vol. % und einer mittleren Agglomeratgröße im Bereich zwischen 5 µm und 500 µm.

Die vorliegende Erfindung betrifft auch ein Verfahren zur Herstellung von gesinterten Schleifkornagglomeraten sowie ihre Verwendung als Läppmittel, zur Herstellung von organisch oder anorganisch gebundenen Schleifkörpern, zur Herstellung von Schleifmitteln auf Unterlage sowie in Verschleißschutzschichten.

Schleifkornagglomerate sind in vielen Variationen seit langem bekannt und werden üblicherweise in gebundenen Schleifmitteln, wie z. B. Schleifscheiben, oder Schleifmitteln auf Unterlage, wie z. B. Schleifbändern, eingesetzt. Schleifkornagglomerate sind in der Regel aus einzelnen Schleifkörnern, den Primärteilchen, aufgebaut, die mittels eines Binders zu einem Schleifkornagglomerat zusammengelagert werden. Dazu werden als Bindemittel entweder organische oder anorganische Binder eingesetzt, wobei als organischer Binder häufig Phenolharze Anwendung finden, während als anorganische Binder glasartige oder keramische Bindungsmaterialien eingesetzt werden.

Der große Vorteil von Schleifkornagglomeraten besteht darin, dass feinteilige Schleifkörner als Primärteilchen eingesetzt werden können, aus denen dann ein Agglomeratkorn gebildet wird, das im Vergleich zu einem Einzelkorn in vergleichbarer Größe einen vollkommen unterschiedlichen Verschleißmechanismus beim Schleif- und Verschleißprozess zeigt. Ein Einzelkorn vergleichbarer Größe stumpft je nach Druckverhältnissen beim Schleifprozess wieder ab oder es wird zerstört. Beim Schleifkornagglomerat dagegen werden die Schleifbedingungen so ausgewählt, dass einzelne Körner aus dem Verbund herausbrechen, so dass immer wieder neue Schneidkanten gebildet werden und das Agglomeratkorn eine hohe Lebensdauer hat, einen kühlen Schliff und ein homogenes Schliffbild zeigt. Ein weiterer Vorteil der Schleifkornagglomerate besteht darin, dass auf diese Weise feinste Schleifkörner für Schleifprozesse und Schleifwerkzeuge eingesetzt werden können, für die sie sonst aufgrund ihrer geringen Korngröße nicht geeignet sind.

In der DE 103 92 532 B4 werden Schleifkornagglomerate beschrieben, die eine Vielzahl von Schleifkörnern umfassen, die mit einem Bindematerial zusammengehalten werden, wobei das Bindematerial eine Schmelztemperatur zwischen 500 °C und 1400 °C aufweist. In der DE 103 92 532 B4 wird auch ein Verfahren zur Herstellung derartiger Schleifkornagglomerate beschrieben, wobei die Schleifkörner mit einem Bindemittel vermischt werden und anschließend in einem Drehrohrofen in einem Temperaturbereich zwischen 145 °C und 1300 °C einer Wärmebehandlung unterzogen werden. Die so gewonnenen Agglomerate besitzen eine Gesamtporosität zwischen 35 Vol. % und 80 Vol. %, wobei mindestens 30 Vol. % der Poren miteinander verbunden sind. Bei diesem Verfahren entstehen länglich geformte Agglomerate, die ein Längenverhältnis von Länge zu Querschnitt von mindestens 5:1 zeigen. Als Bindemittel werden glasartige Bindungsmaterialien, vitrifizierte Materialien, keramische Materialien, anorganische Bindemittel, organische Bindemittel und Kombinationen davon eingesetzt. Die so gewonnenen Schleifkornagglomerate sollen vor allem in gebundenen Schleifmitteln eingesetzt werden, um den Prozentanteil und die Eigenschaften der Porosität zu kontrollieren und die Porosität in Form einer durchlässigen, miteinander verbundenen Porosität zu erhalten.

In der DE 10 2005 007 661 A1 werden Schleifkörper beschrieben, die aus mittels eines Binders stoffschlüssig miteinander verbundenen Schleifkörnern gebildet sind und zumindest annähernd eine sphärische Außenkontur aufweisen, wobei die Schleifkörper eine Porosität von mindestens 35 Vol. % aufweisen sollen. Diese Schleifkornagglomerate sind aus Einzelschleifkörnern gebildet, deren Partikelgröße im Bereich zwischen 0,05 µm und 10 µm liegt, die dann zu Schleifkornagglomeraten mit einem Außendurchmesser im Bereich zwischen 10 µm und 150 µm zusammengefügt werden. In den Schleifwerkzeugen werden diese Agglomerate als eng klassierte, quasi konstante Körnungen, eingesetzt. Als Binder werden bevorzugt organische Binder verwendet, wie z. B. Phenolharze, Polyurethan, Epoxidharze, Harnstoffharze und Polyvinylbutyral. Gedacht sind die Agglomeratschleifkörper insbesondere für den Einsatz in Schleifmitteln auf Unterlage, wo sie für eine sehr feine schleifende Bearbeitung von Oberflächen von Werkstücken eingesetzt werden.

Obwohl die Herstellung von Schleifkornagglomeraten prinzipiell relativ unkompliziert ist und lediglich darauf beruht, Einzelschleifkörner mit einem Bindemittel zusammenzubringen und zu einem Schleifkornagglomerat zu formen und anschließend thermisch zu behandeln, treten in der Praxis bei nahezu sämtlichen bekannten Verfahren verfahrenstechnische Probleme auf, homogene und gleichmäßig ausgebildete Agglomerate zu erhalten, sowohl in Bezug auf die Agglomeratgröße, als auch die Agglomeratform und den Aufbau der Agglomerate. Die Probleme haben meist die Ursache darin, dass äußerst feine Schleifkörner mit einer mittleren Korngröße von wenigen Mikrometern mit einem Binder vermischt und anschließend thermisch behandelt werden. Beim Einsatz von festen Bindern kann das Problem schon damit begründet sein, dass die Teilchengröße des Bindemittels gröber ist als die des zu bindenden Schleifkorns, was eine homogene Durchmischung erschwert. Beim Einsatz von flüssigen oder mit Lösemittel verdünnten Bindern besteht das Problem häufig darin, dass die Schleifkörner beim Durchmischen mit dem Lösungsmittel verklumpen, wodurch eine homogene Verteilung des Bindemittels in der Schleifkörnung verhindert und die Herstellung eines homogenen Produktes erschwert wird.

Ein weiteres verfahrenstechnisches Problem insbesondere beim Einsatz von organischen Bindern besteht in der Verunreinigung der eingesetzten Apparaturen, da die Mischungen aus Binder und feinsten Schleifkörnern zum Verkleben an den Wänden der Apparatur neigen. Dies führt insbesondere bei Produktwechseln zu einem hohen Reinigungsaufwand, da bei der Herstellung von Agglomeratkörnern gewährleistet sein muss, dass das Schleifkornagglomerat aus Schleifkörnern mit einer engen Korngrößenverteilung aufgebaut ist. Die Verunreinigung mit gröberen Körnern würde beispielsweise bei Schleifoperationen, bei denen die Feinstbearbeitung von Oberflächen von Werkstücken im Vordergrund steht, wie beispielsweise die Bearbeitung von dekorativen Lackschichten, zu beträchtlichen Problemen führen, da durch derartige Verunreinigung mit groben Körnern Kratzer entstehen, die sich nachträglich, wenn überhaupt, nur noch mit einem ganz erheblichen Arbeitsaufwand beseitigen lassen. Bei organischen Bindemitteln ist neben der Verunreinigung der Apparaturen auch noch die Umweltproblematik zu nennen, da die Verwendung von organische Lösungsmitteln oder Bindern meist mit einer Geruchsbelästigung und Gesundheitsrisiken verbunden sind.

Somit lag der vorliegenden Erfindung das Problem zugrunde, Schleifkornagglomerate zur Verfügung zu stellen, die die Nachteile des Standes der Technik nicht aufweisen.

Aufgabe der Erfindung ist es auch, ein Verfahren zur Herstellung von Schleifkornagglomeraten zur Verfügung zu stellen, das die verfahrenstechnischen Probleme des Standes der Technik nicht aufweist.

Gelöst wird das Problem bzw. die Aufgabe durch gesinterte Schleifkornagglomerate mit den Merkmalen des Anspruchs 1 sowie ein Verfahren zur Herstellung von Schleifkornagglomeraten mit den Merkmalen des Anspruchs 9. Vorteilhafte Ausführungsformen der erfindungsgemäßen Schleifkornagglomerate bzw. des erfindungsgemäßen Verfahrens sind Gegenstand der entsprechenden Unteransprüche.

Die erfindungsgemäßen gesinterten Schleifkornagglomerate sind aus Primärteilchen auf Basis von Aluminiumoxid aufgebaut, wobei der Anteil an Aluminiumoxid mindestens 80 Gew. % beträgt. Der mittlere Primärteilchendurchmesser liegt unter 5 µm und die Agglomerate selber besitzen im Wesentlichen eine sphärische Außenkontur. Dabei handelt es sich bei den gesinterten Schleifkornagglomeraten nicht um dichte Formkörper, sondern um Agglomerate mit einem Porenanteil von mindestens 15 Vol. %, bei einer mittleren Agglomeratgröße im Bereich zwischen 5 µm und 500 µm. Im Gegensatz zum Stand der Technik sind die Primärteilchen aus Aluminiumoxid im erfindungsgemäßen Schleifkornagglomerat ohne zusätzliches Bindemittel miteinander verbunden.

Um reproduzierbare Schleifergebnisse zu erzielen, wird angestrebt, dass die Poren homogen in einem Schleifkornagglomerat verteilt sind, wobei der Porendurchmesser sich ebenfalls in einem engen Größenbereich bewegen sollte. Im erfindungsgemäßen Schleifkornagglomerat weisen die Poren einen mittleren Durchmesser von weniger als 2000 nm, bevorzugt weniger als 1000 nm, auf. Besonders gute Ergebnisse werden mit Schleifkornagglomeraten erzielt, die einen mittleren Porendurchmesser zwischen 100 nm und 300 nm aufweisen.

Wie oben erwähnt, wird in der Regel eine gleichmäßige Porenverteilung angestrebt, um konstante Produkteigenschaften zu erhalten. Es ist jedoch auch möglich und kann vorteilhaft sein, insbesondere durch eine geeignete Wahl der Sintertemperatur, die Porosität des Produktes zu verändern und so die Produkteigenschaften besonderen Anwendungszwecken anzupassen.

Vorteilhaft liegen die mittleren Primärteilchendurchmesser unter 3 µm, bevorzugt unter 1 µm, und besonders bevorzugt unter 0.5 µm. Die Schüttdichte der Schleifkornagglomerate liegt zwischen 1.4 und 2.9 kg/l, wobei die Schleifkornagglomerate eine spezifische Oberfläche (BET) zwischen 3 und 0.1 m²/g aufweisen. Beeinflusst wird die spezifische Oberfläche insbesondere durch die Sintertemperatur, wobei ausgehend von einer spezifischen Oberfläche des Agglomeratgrünkörpers von ca. 20 m²/g bei einer Sintertemperatur von 1450 °C eine spezifische Oberfläche von ca. 2 m²/g erreicht wird, während bei einer höheren Sintertemperatur eine stärkere Verdichtung des Agglomerats stattfindet und beispielsweise bei 1550 °C eine spezifische Oberfläche von nur ca. 0.3 m²/g gemessen wird.

Da die Stabilität der Agglomerate nicht ausreicht, um eine Kornbruchfestigkeit nach Vollstädt zu bestimmen, wurde auf eine Einzelkornfestigkeitsprüfung verzichtet und stattdessen wurden vergleichende Kompressionsversuche mit Agglomeratgrünkörpern und Agglomeraten durchgeführt. Erwartungsgemäß zeigte sich, dass die Agglomeratgrünkörper leicht verdichtet werden können, während die gesinterten Schleifkornagglomerate nur eine sehr geringe Verdichtung zulassen. Die Enddruckfestigkeit der Schleifkornagglomerate ist erwartungsgemäß höher als die der Agglomeratgrünkörper. Nach dem Druckversuch liegen die Agglomeratgrünkörper als kompakter Körper vor, während die gesinterten Schleifkornagglomerate quasi ohne Zerstörung aus der Pressform herausfließen. Die Druckversuche wurden in einem einfachen Messingring als Druckform durchgeführt, in den die Agglomerate eingefüllt wurden und dann mit einem Druckstempel mit Drücken bis zu 200 N beaufschlagt wurden.

Die Schleifkornagglomerate weisen bevorzugt einen Gehalt von mindestens 90 Gew. % Aluminiumoxid auf, besonders bevorzugt mindestens 98 Gew. %. Allerdings kann die chemische Zusammensetzung in bestimmten Bereichen je nach Bedarf variieren und es sind bevorzugte Ausgestaltungen der Schleifkornagglomerate vorgesehen, die in Summe bis zu maximal 20 Gew. % an Verbindungen aus der Gruppe der Elemente Wolfram, Titan, Chrom, Zirkon, Magnesium, Silizium, Bor, Kohlenstoff und/oder Stickstoff, bezogen auf das Gesamtgewicht des Schleifkornagglomerats, aufweisen. Diese Verbindungen können als Oxide, Carbide oder Nitride vorliegen, wobei sie entweder als Verunreinigung bereits im Rohstoff vorhanden sein können oder während der Nassvermahlung bzw. nach erfolgter Nassvermahlung gezielt zugegeben werden oder gegebenenfalls indirekt als Mahlkörperabrieb in die Suspension eingebracht werden.

In diesem Zusammenhang wird darauf hingewiesen, dass die vorliegende Erfindung auch weitergehende prinzipielle Möglichkeiten umfasst, Verbundwerkstoffe in Agglomeratform herzustellen, wobei das erfindungsgemäße Agglomerat quasi die Verbundbasis darstellt und durch entsprechende Beimischungen Verbundagglomerate mit definierten Anteilen an anderen Hartstoffen oder sonstigen Mineralien gewonnen werden können. Die mittlere Korngröße solcher Hartstoffe oder Mineralien können dabei kleiner, gleich groß oder auch größer als die jeweils vorliegende Primärteilchengröße des Basismaterials sein.

Das Verfahren zur Herstellung von Schleifkornagglomeraten geht aus von einer Nassvermahlung einer kalzinierten Tonerde in einer Rührwerkskugelmühle, wobei als Mahlkörper vorzugsweise Aluminiumoxid-Mahlperlen oder Mahlperlen aus stabilisiertem Zirkonoxid eingesetzt werden. Als Rohstoff wird vorzugsweise eine feinteilige kalzinierte Tonerde eingesetzt, die zur Herstellung einer Suspension mit Hilfe einer Nassvermahlung auf eine mittlere Teilchengröße von < 5 µm, bevorzugt < 1 µm, und besonders bevorzugt < 0,5 µm gemahlen oder desagglomeriert wird. Die Zerkleinerung kann vorteilhaft mittels einer Vibrationsmühle, eine Attritors oder einer Rührwerkskugelmühle erfolgen. Die die Suspension enthält nach der Vermahlung meist einen Feststoffgehalt zwischen ca. 5 Gew. % und ca. 70 Gew. %, bevorzugt zwischen ca. 30 Gew. % und ca. 60 Gew. %. Dabei können der Suspension nach Bedarf organische Stabilisatoren als Dispergierhilfen zugegeben werden. Die Vermahlung findet vorzugsweise in Wasser statt, wobei der Einsatz anderer Lösungsmittel, wie z. B. Alkohole, Ketone oder andere polare organische Flüssigkeiten, ebenfalls möglich ist, jedoch ökologische, ökonomische und sicherheitstechnische Gründe dagegen sprechen.

Das Trocknen der vermahlenen Tonerdedispersion erfolgt über eine Sprühtrocknung, wobei Agglomeratgrünkörper entstehen, die nach der Trocknung eine maximale Restfeuchte von ca. 6 Gew. % aufweisen. Besonders vorteilhaft weist das Zwischenprodukt eine Restfeuchte von < 1 Gew. % auf.

Durch geeignete Wahl der Trocknungsbedingungen (Heißluftmenge, Flüssigkeitsdruck, Sprühturmdimensionen) kann die Agglomeratgröße des Produkts in einem relativ engen Bereich eingestellt werden. Auf diese Weise gelingt es problemlos, Agglomerate in einem Größenbereich zwischen 5 µm und 500 µm zu erhalten. Durch eine gezielte Einstellung der Trocknungsparameter können vorteilhafte Agglomeratgrünkörper mit einer Agglomeratgröße zwischen 30 µm und 300 µm erhalten werden. Eine weitere Klassierung kann durch anschließendes Aussieben erfolgen.

Die so erhaltenen Agglomeratgrünkörper werden dann in einem Temperaturbereich zwischen 1300 °C und 1750 °C gesintert. An das Sinterverfahren selber werden keine besonderen Anforderungen gestellt und es können Drehrohröfen, Durchschuböfen oder Kammeröfen eingesetzt werden. Aus verfahrenstechnischen Gründen ist es vorteilhaft, die Sinterung in einem direkt beheizten Drehrohrofen durchzuführen, in dem hohe Aufheizraten und kurze Verweilzeiten realisiert werden können. Der bevorzugte Temperaturbereich für die Sinterung liegt zwischen 1400 °C und 1550 °C.

Die auf diese Weise gewonnenen Schleifkornagglomerate können insbesondere als Läppmittel sowie zur Herstellung von organisch oder anorganisch gebundenen Schleifkörpern und zur Herstellung von Schleifmitteln auf Unterlage vorteilhaft eingesetzt werden. Daneben bieten sich Verwendungszwecke in Verschleißschutzschichten auf Basis von anorganischen, organischen oder elastomeren Verbundsystemen an, wie z. B. lösemittelhaltigen oder auf Wasser basierenden Farben, Lacken, Pulverlacken oder Email. Ein weiteres Anwendungsgebiet ist die Verwendung in Imprägnaten bei der Herstellung von verschleißfesten Oberflächen für Bodenbeläge, wie z. B. Laminate, Parkett oder PVC oder CV-Beläge, für Möbel, Fliesen, Kochtöpfe und/oder Pfannen.

Im Folgenden wird die vorliegende Erfindung anhand von Abbildungen und Beispielen ausführlich erläutert.

Dabei zeigen:
- Figur 1: eine rasterelektronenmikroskopische Aufnahme eines Schnitts durch ein bei 1450 °C gesintertes Schleifkornagglomerat in 3000-facher Vergrößerung,
- Figur 2: eine rasterelektronenmikroskopische Aufnahme eines Schnitts durch ein bei 1550 °C gesintertes Schleifkornagglomerat in 3000-facher Vergrößerung,
- Figur 3: eine rasterelektronenmikroskopische Aufnahme einer Oberfläche eines Schleifkornagglomerats in 10000-facher Vergrößerung,
- Figur 4: eine rasterelektronenmikroskopische Aufnahme einer Schüttung von Schleifkornagglomeraten in 30-facher Vergrößerung und die
- Figuren 5 - 8: jeweils über Quecksilberporosimetrie gemessene Porenverteilungskurven von unterschiedlich abgesiebten, bei 1450 °C gesinterten Schleifkornagglomeratfraktionen.

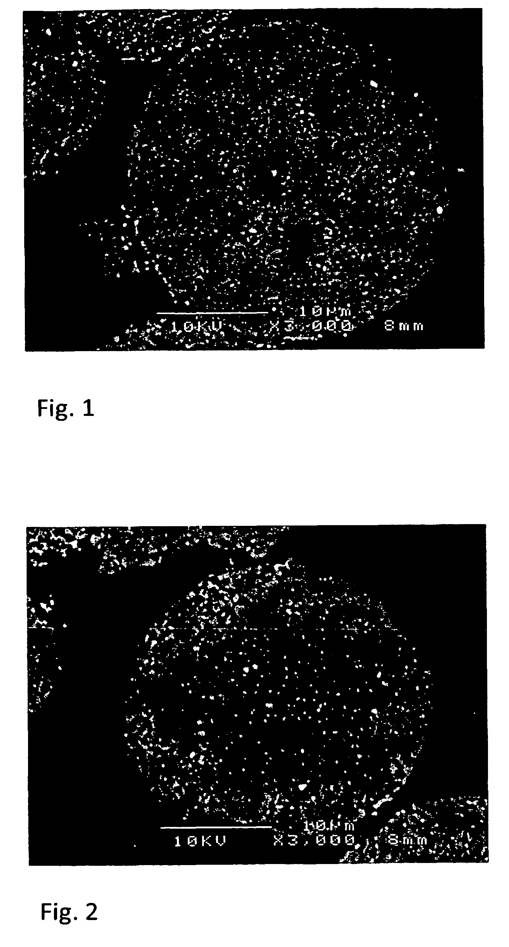

Nachdem überraschenderweise gefunden worden war, dass ohne den Einsatz von Bindemittel durch einfaches Sintern von Sprühagglomeraten feste und relativ kompakte Schleifkornagglomerate gewonnen werden können, die hervorragend für bestimmte Schleifoperationen geeignet sind, wurde an der Optimierung der Schleifkornagglomerate gearbeitet. Dabei stellte sich heraus, dass die Porosität der Agglomerate für den späteren Einsatz als Schleifkornagglomerat eine große Rolle spielt. Die Figur 1 zeigt als Schnittdarstellung eine Rasterelektronenaufnahme eines bei 1450° C gesinterten Schleifkornagglomerats in 3000-facher Vergrößerung. Dabei ist ein relativ großer Porenanteil zu erkennen (dunkle Bereiche), der in diesem Fall homogen über das nahezu ideal sphärische Schleifkornagglomerat verteilt ist. Aus der Abbildung ist zu erkennen, dass die Porengröße deutlich unter 2000 nm, schätzungsweise im Bereich von ca. 100 nm und 300 nm, liegt. Der Agglomerat-Durchmesser beträgt ca. 30 µm.

Die Figur 2 zeigt die Rasterelektronenaufnahme eines etwa gleich großen Schleifkornagglomerats als Schnittdarstellung ebenfalls in 3000-facher Vergrößerung, wobei das Schleifkornagglomerat in diesem Fall bei 1550° C gesintert wurde. Im direkten Vergleich mit der Figur 1 ist deutlich zu erkennen, dass das bei 1550 °C gesinterte Schleifkornagglomerat im Zentrum wesentlich dichter ist und offensichtlich aufgrund der höheren Sintertemperatur eine Verdichtung im Agglomeratkern stattgefunden hat. Das Schleifkornagglomerat gemäß Figur 2 ist damit weniger homogen aufgebaut, was sich insbesondere bei bestimmen abrasiven Einsätzen, und hier vor allem beim Einsatz in Schleifmittel auf Unterlagen, negativ bemerkbar macht. So wurde gefunden, dass eine gleichmäßige Verteilung von feinen Poren sich positiv auf das Schleifergebnis auswirkt und ein Übersintern des Produktes in der Regel vermieden werden muss, wenn man optimale Resultate erhalten will. Je nach Anwendung kann es jedoch auch vorteilhaft sein, mit Hilfe der Temperatureinstellung gezielt dichtere und weniger poröse Materialien herzustellen, die dann für Spezialanwendungen eingesetzt werden können. Ein Beispiel für solche Anwendungen ist der Verschleißschutz in sehr dünnen Lackschichten. Die dabei üblicherweise eingesetzten kompakten feinstteiligen Korundschleifkörnungen besitzen eine porenfreie und relativ glatte Oberfläche, aus der die Korundkörner bei mechanischer Belastung relativ leicht aus dem Lackverbund herausbrechen.

Das in Figur 2 dargestellte Agglomeratkorn zeigt eine poröse Oberfläche (oder Umhüllung) eines kompakten Kernes. Mit einem geeigneten Flüssiglacksystem kann diese poröse Oberfläche beim Einsatz des Agglomeratkorns als Verschleißschutz in einer dünnen Lackschicht aufgrund ihrer Kapillarität infiltriert werden und es ergibt sich nach entsprechender Aushärtung des Lackes eine stoffschlüssige Verbindung zwischen Agglomeratkorn und Lackschicht mit einer erhöhten Bindungsfestigkeit. Gleichzeitig besitzt der dicht gesinterte Kern eine höhere Druckfestigkeit im Vergleich zu einem homogen porösen Agglomeratkorn.

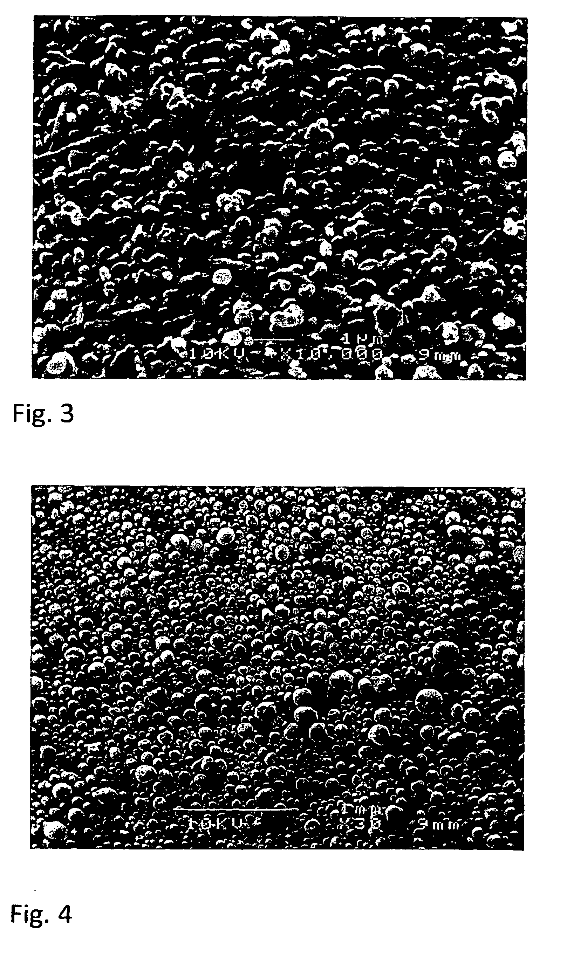

Bei der Figur 3 handelt sich um eine Rasterelektronenmikroskop-Aufnahme der Oberfläche eines Schleifkornagglomerats in 10000-facher Vergrößerung. Aus dieser Darstellung ist insbesondere der Primärteilchendurchmesser zu erkennen, wobei in dem vorliegenden Fall der mittlere Primärteilchendurchmesser deutlich unter 1 µm liegt.

In der Figur 4, einer Rasterelektronenaufnahme in 30-facher Vergrößerung, ist eine Vielzahl von Schleifkornagglomeraten zu erkennen. Dabei ist eine Agglomeratgrößenverteilung wiedergegeben, wie sie üblicherweise beim Sprühtrocknen anfällt. Die größten Einzelagglomerate liegen im Bereich von ca. 200 µm, während die kleinsten Agglomerate eine Agglomeratgröße von ca. 20 µm bis ca. 30 µm aufweisen. Je nach Verwendungszweck für die Schleifkornagglomerate können aus diesem Agglomeratspektrum problemlos bestimmte Fraktionen ausgesiebt werden, so dass für den späteren Schleif- oder Verschleißschutzeinsatz je nach Bedarf relativ enge Kornverteilungen zur Verfügung gestellt werden können.

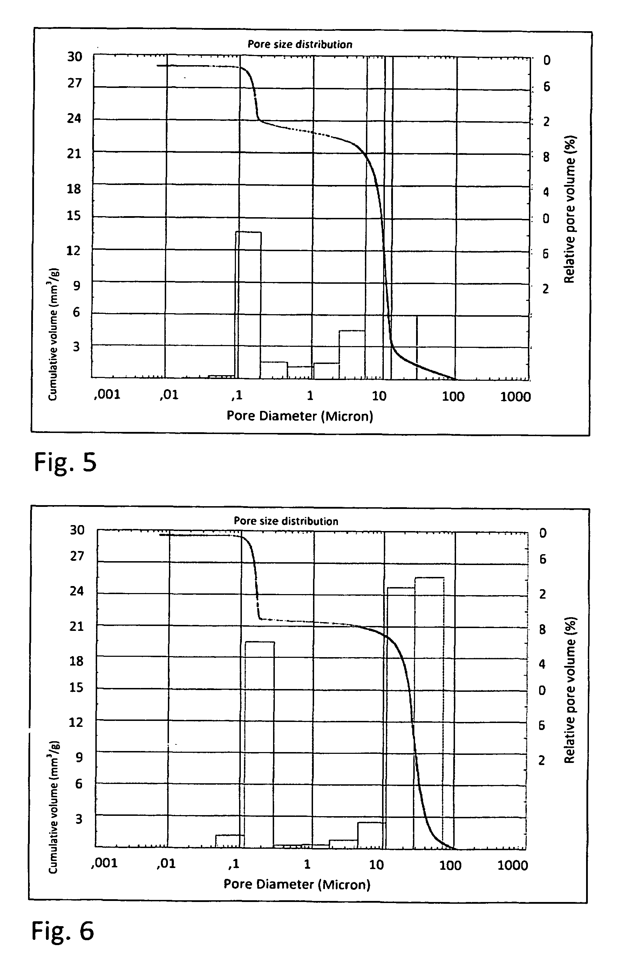

Es wurden weitere Untersuchungen zur Porenverteilung durchgeführt, die anhand der Figuren 5 - 8 erklärt werden und im Folgenden durch entsprechende tabellarisch aufgeführte Messergebnisse ausführlich erläutert werden.

Die in Figur 5 grafisch dargestellte Porengrößenverteilung einer bei 1450 °C gesinterten Schleifkornagglomerat-Fraktion mit einer Agglomeratgröße zwischen 0 µm und 32 µm ist in der folgenden Tabelle 1 zusammengefasst.

**Tabelle 1**

| **Allgemeine Agglomeratdaten** | **Porengrößenverteilung (HG-Porosimetrie)** | |
|---|---|---|
| **Sintertemperatur:** 1450 °C | **Porengröße (µm)** | **Relatives Poren-volumen (%)** |
| **Agglomeratfraktion:** | 110 - 57 | 2.08 |
| 0 - 32 µm | 57 - 30 | 2.49 |
| **Schüttdichte:** | 30 - 15 | 4.46 |
| 1.58 g/cm³ | 15 - 8 | 52.87 |
| **Spezifische Oberfläche:** | 8 - 4 | 12.86 |
| 2.10 m²/g | 4 - 2 | 2.63 |
| **Gesamtporosität:** | 2 - 1 | 1.48 |
| 61.04 % | 1 - 0.6 | 0.82 |
| **Mittlerer Porendurchmesser:** | 0.6 - 0.3 | 1.59 |
| 8.56 µm | 0.3 - 0.1 | 18.23 |
| | 0.1 - 0.05 | 0.44 |
| | 0.05 - 0.01 | 0.05 |

Bei der grafischen Darstellung der oben tabellarisch zusammengefassten Porengrößenverteilung fällt auf, dass es sich um eine bimodale Verteilung handelt mit einem Maximum der Poren im Bereich von 15 µm bis 8 µm und einem weiteren Maximum im Bereich von 300 nm bis 100 nm. Wie später auch anhand der gröberen Agglomeratfraktionen aufgezeigt werden kann, ist die bimodale Verteilung ausschließlich auf die Messmethode zurückzuführen, da bei der Quecksilberporosimetrie Agglomeratschüttungen vermessen werden, wobei dann nicht nur die Poren in den Agglomeraten gemessen werden, sondern vor allem auch die Leerräume zwischen den einzelnen Agglomeraten der Schüttung. Bei einer Agglomeratgröße zwischen 0 µm und 32 µm liegen die Durchmesser dieser Leerräume zwischen 15 µm und 8 µm. Die eigentlichen Poren, die das Schleifkornagglomerat charakterisieren, liegen dagegen im Bereich von 300 nm bis 100 nm. Die gemessene Gesamtporosität bezieht sich damit auch nicht auf das einzelne Schleifkornagglomeratteilchen, sondern wiederum auf die Schüttung, wobei die Porosität des Schleifkornagglomerats selber im vorliegenden Fall lediglich bei ca. 19 Vol. % liegt.

In der Figur 6 ist die Porengrößenverteilung für eine bei 1450° C gesinterte Schleifkornagglomeratfraktion im Bereich von 32 µm bis 75 µm grafisch wiedergegeben. Die entsprechenden Messergebnisse sind in der folgenden Tabelle 2 zusammengefasst.

**Tabelle 2**

| **Allgemeine Agglomeratdaten** | **Porengrößenverteilung (HG-Porosimetrie)** | |
|---|---|---|
| **Sintertemperatur:** 1450 °C | **Porengröße (µm)** | **Relatives Poren-volumen (%)** |
| **Agglomeratfraktion:** | 110 - 57 | 3.38 |
| 32 -75 µm | 57 - 30 | 25.31 |
| **Spezifische Oberfläche:** | 30 - 15 | 36.28 |
| 2.16: m²/g | 15 - 8 | 4.4 |
| **Schüttdichte:** | 8 - 4 | 1.96 |
| 1.86 g/cm³ | 4 - 2 | 0.54 |
| **Gesamtporosität:** | 2 - 1 | 0.47 |
| 54.86 % | 1 - 0.6 | 0.2 |
| **Mittlerer Porendurchmesser:** | 0.6 - 0.3 | 0.37 |
| 44.16 µm | 0.3 - 0.1 | 26.29 |
| | 0.1 - 0.05 | 0.78 |
| | 0.05 - 0.01 | 0.00 |

Auch in diesem Fall liegt eine bimodale Verteilung der Porengröße vor, wobei nun die Leerräume zwischen den einzelnen Agglomeratteilchen der Agglomeratfraktion zwischen 32 µm und 75 µm ebenfalls in den gröberen Bereich verschoben sind und im Bereich zwischen 60 µm und 15 µm ein Maximum aufweisen. Unverändert ist das Maximum für die Porengrößenverteilung der im Agglomeratkorn angesiedelten Poren im Bereich von 100 nm bis 300 nm angesiedelt. Im vorliegenden Fall weist das Schleifkornagglomerat eine Porosität von ca. 27 Vol. % auf, während die Gesamtporosität der Schüttung bei 54.9 Vol. % liegt. Der gemessene mittlere Porendurchmesser der Schüttung liegt bei 44.2 µm. Dieses Ergebnis wird fast ausschließlich von den groben Leerräumen zwischen den einzelnen Schleifkornagglomeraten geprägt und lässt keine Rückschlüsse auf den mittleren Porendurchmesser der Schleifkornagglomerate selber zu.

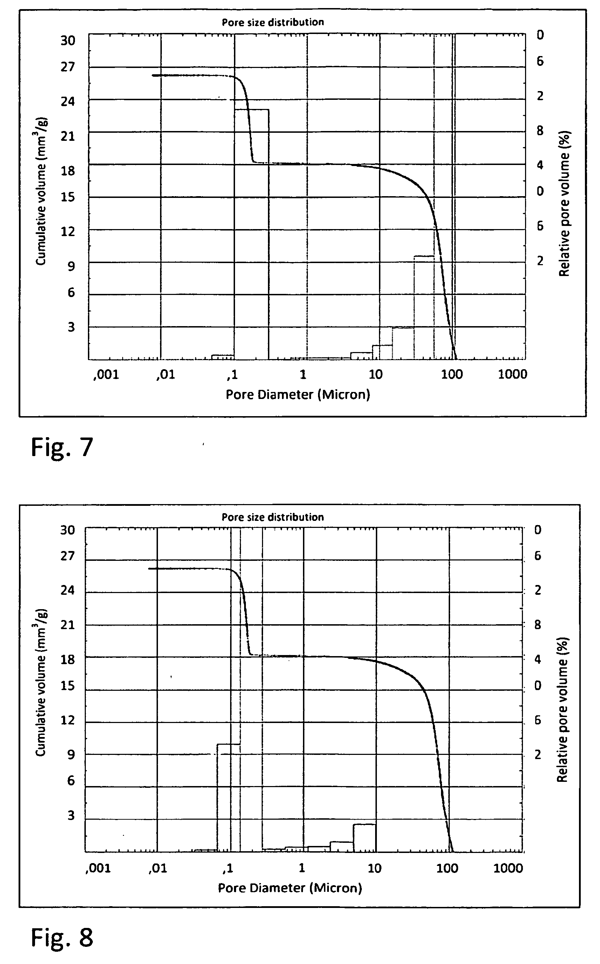

Die Figur 7 zeigt eine grafische Darstellung der Porengrößenverteilung einer bei 1450° C gesinterten Schleifkornagglomeratfraktion im Bereich von 150 µm bis 250 µm. Die entsprechenden Messergebnisse sind in der Tabelle 3 zusammengefasst.

Auch die in Figur 7 gezeigte Grafik zeigt wiederum eine bimodale Funktion, bei der ein Maximum an Feinporen im Bereich von 100 nm bis 300 nm zu erkennen ist, während die groben Poren ihren maximalen Bereich von 110 µm bis 57 µm aufweisen. Bei dieser relativ groben Schleifkornagglomeratfraktion mit 150 µm bis 250 µm weisen auch die Leerräume zwischen den einzelnen Schleifkornagglomeraten, die bei der Quecksilberporosimetrie mitgemessen werden, einen entsprechend großen Durchmesser auf, der in diesem Fall bei 110 µm bis 75 µm liegt. Die Gesamtporosität der Schüttung liegt bei 56.8 %, während die Porosität des Schleifkornagglomerats selber bei ca. 30.1 Vol. % liegt.

**Tabelle 3**

| **Allgemeine Agglomeratdaten** | **Porengrößenverteilung (HG-Porosimetrie)** | |
|---|---|---|
| **Sintertemperatur:** 1450 °C | **Porengröße (µm)** | **Relatives Poren-volumen (%)** |
| **Agglomeratfraktion:** | 110 - 57 | 48.82 |
| 150 -250 µm | 57 - 30 | 12.7 |
| **Spezifische Oberfläche:** | 30 - 15 | 3.85 |
| 2.15: m²/g | 15 - 8 | 1.7 |
| **Schüttdichte:** | 8 - 4 | 0.89 |
| 1.96 g/cm³ | 4 - 2 | 0.24 |
| **Gesamtporosität:** | 2 - 1 | 0.21 |
| 51.29 % | 1 - 0.6 | 0.18 |
| **Mittlerer Porendurchmesser:** | 0.6 - 0.3 | 0.09 |
| 56.75 µm | 0.3 - 0.1 | 30.76 |
| **für den Bereich 0.01 bis 10 µm:** | 0.1 - 0.05 | 0.57 |
| 0.194 µm (berechnet) | 0.05 - 0.01 | 0.00 |

Der direkte Vergleich zwischen den einzelnen Schleifkornfraktionen zeigt, dass die Schleifkornagglomerate selber nahezu ausschließlich durch nanoskalige Poren im Bereich zwischen 100 nm und 300 nm geprägt sind.

Um den tatsächlich mittleren Porendurchmesser zu messen, wurden daher weitere Messungen durchgeführt, bei denen nur noch der Bereich zwischen 1 µm und 10 nm zur Bestimmung des mittleren Porendurchmessers herangezogen wurde.

Die Figur 8 zeigt eine grafische Darstellung der Porengrößenverteilung der bei 1450 °C gesinterten Schleifkornagglomeratfraktion im Bereich von 150 µm bis 250 µm. Wie zu erkennen ist, bewirkt das Abschneiden des Porengrößenbereichs oberhalb von 10 µm, dass mit 0.194 µm ein wesentlich realistischerer mittlerer Porendurchmesser für das Schleifkornagglomerat berechnet wird, bei dem der Grobporenbereich der Leerräume nur noch wenig ins Gewicht fällt.

In den folgenden Beispielen sind die Herstellung sowie die Verwendung der erfindungsgemäßen Schleifkornagglomerate beschrieben.

### Beispiel 1

Kommerziell erhältliche kalzinierte Tonerde (Nabalox NO 713-10 RF, Fa. Nabaltec) wird in einer Rührwerkskugelmühle unter Verwendung von Y-stabilisierten Zirkonoxid-Mahlkugeln bis zu einer mittleren Korngröße zwischen 0.35 µm und 0.55 µm nass vermahlen. Die Partikelgröße der Teilchen in der ca. 50 %igen Suspension wurde mittels eines Sympatec-Helos-Korngrößenmessgeräts bestimmt. Dabei wurde eine Partikelgröße von D_{90%} = 0.85 µm, D_{50%} = 0.44µm und D_{10%} = 0.2 µm ermittelt. Die Oberfläche wurde zu 20,6 m²/g bestimmt (BET). Diese Suspension wurde anschließend sprühgetrocknet, wobei die Korngröße der Agglomerate im Bereich von 0 µm bis 200 µm eingestellt wurde. Anschließend erfolgte eine Sinterung im Kammerofen bei unterschiedlichen Sintertemperaturen, wobei der Agglomeratgrünkörper jeweils für ca. 30 Minuten auf der vorgesehenen Sintertemperatur gehalten wurde. Es wurden jeweils Proben bei 1450 °C, 1500 °C und 1550 °C gesintert.

### Beispiel 2

Aus den in Beispiel 1 hergestellten, bei unterschiedlichen Temperaturen gesinterten Agglomeratkornfraktionen wurde ein engerer Korngrößenbereich ausgesiebt, der einer FEPA-Körnung F100 angeglichen wurde. Für die folgenden Versuche wurde dann eine Edelkorundkörnung ebenfalls als Korn 100 eingesetzt (ALODUR WSK, Fa. Treibacher). Von allen vier Körnungen wurde jeweils eine wässrige Suspension hergestellt, indem jeweils 3 g Schleifkorn mit 40 ml destilliertem Wasser versetzt wurden. Diese Suspensionen wurden jeweils in ein Edelstahlgefäß mit einem Ultraschallfinger (20 kHz, 200 Watt) jeweils für 10, 15, 20, 25 und 30 Minuten beschallt. Die Suspensionen wurden danach in Glasflaschen überführt und nach einer Absetzzeit von zwei Tagen durch das Absetzverhalten fotografisch dokumentiert und ausgewertet.

Der Edelkorund Weiß (ALODUR WSK, Treibacher) zeigt auch nach einer Behandlungszeit von 30 Minuten nur eine geringe Zerspanungsleistung am Edelstahlgefäß sowie an dem Ultraschallfinger. Die abgetragenen Metallpartikel sind relativ grob und sedimentieren sehr gut, so dass für alle Behandlungszeiten eine fast klare Lösung vorliegt.

Das bei 1450 °C gesinterte Agglomeratschleifkorn dagegen zeigt eine deutlich höhere Zerspanungsleistung. Dabei sind die zerspanten Metallpartikel sehr klein, so dass quasi keine Sedimentation erfolgt und die Lösungen auch nach zwei Tagen dunkelgrau bis schwarz vorliegen.

Die bei 1500 °C gesinterte Agglomeratschleifkörnung zerspant deutlich schlechter und eine konstante Trübung der Lösung ist erst in dem Muster mit einer Behandlungszeit von 30 Minuten zu erkennen, während die übrigen Proben sedimentieren.

Das bei 1550 °C gesinterte Schleifkornagglomerat verhält sich vergleichbar dem Edelkorund Weiß und es liegt selbst bei dem mit 30 Minuten lang behandelten Muster eine nahezu klare Lösung vor.

Dieses Verhalten lässt sich mit der bei steigender Sintertemperatur zunehmenden Bindungsfestigkeit zwischen den Primärteilchen, dem bei steigender Sintertemperatur zunehmenden Kristallwachstum und dem mit steigender Sintertemperatur abnehmenden Porenvolumen erklären.

### Beispiel 3

Zur Simulation eines Ultraschall-Läppprozesses wurden in Analogie zu Beispiel 2 diverse Läppsuspensionen mit höherem Feststoffanteil hergestellt. Dazu wurden 100 g Feststoff (Schleifkornagglomerate bzw. Edelkorund) zu 120 ml Wasser gegeben.

Der Ultraschallfinger wurde mit einem mattierten Blech aus Cr-Ni-Edelstahl sowie in einem weiteren Versuch mit einem mattierten Blech aus einer Aluminium-Legierung formschlüssig verbunden.

Nach einer Läppzeit von jeweils 30 Minuten wurde die Oberfläche der Prüfbleche geprüft. Dabei konnte festgestellt werden, dass die Suspension mit den bei 1450 °C gesinterten Schleifkornagglomeraten die niedrigste Rauhtiefe ergab. Verglichen wurde mit einer Edelkorund-Suspension sowie Suspensionen von bei 1500 °C und 1550 °C gesinterten Schleifkornagglomeraten. Diese Ergebnisse korrelieren somit mit den in Beispiel 2 gefundenen Mikrozerspanleistungen.

### Beispiel 4

Nachdem überraschend festgestellt wurde, dass die porösen Agglomerate eine ausgeprägte Kapillarität zeigen und sich schnell und einfach durch Infiltration mit Flüssigkeiten, wie z.B. wasserbasierenden oder ölbasierenden Flüssigschmierstoffen füllen lassen, wurde weitere Versuche in diese Richtung durchgeführt.

Eine bei 1470 °C gesinterte und in einem Korngrößenbereich zwischen 60 und 100 µm ausgesiebte Agglomeratkörnung wurde durch einfaches Vermischen in einem Intensivmischer mit Polymethylsiloxan-Öl (Fa. Bayer, Baysilon Öl M50) bzw. einer entsprechenden Ölemulsion (Fa. Bayer, Baysilon Ölemulsion H) infiltriert. Dabei wurde die Trockenfließfähigkeit der Mischungen als Maß für die zur vollständigen Infiltration der Poren notwendige Menge Öl bzw. Emulsion herangezogen, wobei im vorliegenden Fall bis zu einer Zugabe von ca. 16 ml Emulsion bzw. 14 ml Öl pro 100 g Agglomeratkorn noch eine fließfähige Mischung vorlag.

Es wurden 400 g Agglomeratkorn mit 40 ml Emulsion infiltriert, mit dem dann Schleifbänder für die Bearbeitung von Autolackoberflächen hergestellt wurden. Als Referenz wurde ein Schleifband mit unbehandelten Agglomeraten hergestellt. Die Herstellung der Bänder selber erfolgte durch Nassauftrag einer Agglomeratkorn/Harz-Suspension mittels Rakel auf eine Unterlage und anschließende thermische Aushärtung.

Die Lackoberfläche wurde dann mit aus diesen Bändern ausgestanzten Schleifdisks mit Hilfe einer herkömmlichen Exzenterschleifmaschine bearbeitet. Beim anschließenden Vermessen der Rautiefen wurde festgestellt, dass die Bänder mit infiltrierten Agglomeraten im Vergleich zu den Bändern mit unbehandelten Agglomeraten eine niedrigere mittlere Rautiefe bewirkten und damit ein feineres Schliffbild zeigten, was insbesondere bei der Oberflächenbehandlung von Autokarosserielacken Vorteile bringt. Dieses feinere Schliffbild ist möglicherweise auf eine in situ Ölschmierung während des Polierens zurückzuführen.

Die oben geschilderten Ergebnisse lassen erkennen, dass die gesinterten porösen Schleifkornagglomerate hervorragend geeignet sind als Schleif-, Läpp- oder Poliermittel.

Für Anwendungen in gebundenen Schleifmitteln, bei denen üblicherweise hohe Anpressdrücke gefahren werden, denen das Schleifkornagglomerat mit einer homogenen Porenverteilung nicht standhält, können auch die festeren Schleifkornagglomerate, die bei höheren Temperaturen gesintert wurden, von Vorteil sein. Die gleichen Überlegungen gelten auch für die Verwendung in Verschleißschutzschichten, wobei hier die Art des Verschleißes und die Verschleißmechanismen maßgebend sind.

## Patentansprüche

1. Gesinterte Schleifkornagglomerate aufgebaut aus Primärteilchen auf Basis von Aluminiumoxid mit
a) einem Anteil an Aluminiumoxid von mindestens 80 Gew. %,
b) einem mittleren Primärteilchendurchmesser von weniger als 5 µm,
c) einer im Wesentlichen sphärischen Außenkontur,
d) einem Anteil an Poren von mindestens 15 Vol. % und
e) einer mittleren Agglomeratgröße im Bereich zwischen 5 und 500 µm,
**dadurch gekennzeichnet, dass**
die Primärteilchen ohne zusätzliches Bindemittel miteinander verbunden sind.

2. Schleifkornagglomerate nach Anspruch 1,
**dadurch gekennzeichnet, dass**
die Poren einen mittleren Durchmesser von weniger als 2000 nm aufweisen.

3. Schleifkornagglomerate nach Anspruch 1 oder 2,
**dadurch gekennzeichnet, dass**
die Poren einen mittleren Durchmesser von weniger als 1000 nm, bevorzugt zwischen 100 und 300 nm, aufweisen.

4. Schleifkornagglomerate nach einem der Ansprüche 1 bis 3,
**dadurch gekennzeichnet, dass**
die Schleifkornagglomerate einen mittleren Primärteilchendurchmesser von weniger als 3 µm, bevorzugt weniger als 1 µm, und besonders bevorzugt weniger als 0.5 µm aufweisen.

5. Schleifkornagglomerate nach einem der Ansprüche 1 bis 4,
**dadurch gekennzeichnet, dass**
die Schleifkornagglomerate eine Schüttdichte zwischen 1.4 und 2.9 kg/l aufweisen.

6. Schleifkornagglomerate nach einem der Ansprüche 1 bis 5,
**dadurch gekennzeichnet, dass**
die Schleifkornagglomerate eine spezifische Oberfläche (BET) zwischen 3 und 0.1 m²/g aufweisen.

7. Schleifkornagglomerate nach einem der Ansprüche 1 bis 6,
**dadurch gekennzeichnet, dass**
die Schleifkornagglomerate einen Gehalt an Aluminiumoxid von mindestens 90 Gew. %, bevorzugt mindestens 98 Gew. %, aufweisen.

8. Schleifkornagglomerate nach einem der Ansprüche 1 bis 7,
**dadurch gekennzeichnet, dass**
die Schleifkornagglomerate neben dem Aluminiumoxid einen Gesamtanteil an Verbindungen aus der Gruppe der Elemente W, Ti, Cr, Zr, Mg, Fe, Si, B, C, N bis zu maximal 20 Gew. %, bezogen auf das Gesamtgewicht des Schleifkornagglomerats, aufweisen.

9. Verfahren zur Herstellung von Schleifkornagglomeraten gemäß einem der vorangegangenen Ansprüche, umfassend die Schritte:
a) Nassvermahlung einer kalzinierten Tonerde in einer Rührwerkskugelmühle mit Mahlkörpern aus Aluminiumoxid und/oder stabilisiertem Zirkonoxid,
b) Sprühtrocknen oder Sprühgranulieren der vermahlenen Tonerdedispersion zur Herstellung von Agglomerat-Grünkörpern und
c) Sintern der Agglomerat-Grünkörper in einem Temperaturbereich zwischen 1300 °C und 1750 °C.

10. Verwendung von Schleifkornagglomeraten nach einem der Ansprüche 1 bis 9 als Läppmittel.

11. Verwendung von Schleifkornagglomeraten nach einem der Ansprüche 1 bis 9 zur Herstellung von organisch oder anorganisch gebundenen Schleifkörpern.

12. Verwendung von Schleifkornagglomeraten nach einem der Ansprüche 1 bis 9 in Verschleißschutzschichten auf Basis von anorganischen, organischen oder elastomeren Verbundsystemen, wie z.B. lösemittelhaltigen oder auf Wasser basierenden Farben, Lacken, Pulverlacken oder Email für Fliesen, Kochtöpfe und Pfannen, sowie in Imprägnaten bei der Herstellung von verschleißfesten Oberflächen für Bodenbeläge, wie z.B. Laminate, Parkett oder PVC- oder CV-Belägen sowie für Möbeloberflächen.

## Claims

1. Sintered abrasive grit agglomerates formed from primary particles on the basis of aluminium oxide with
a) a portion of aluminium oxide of at least 80 % by weight,
b) an average primary particle diameter of less than 5 µm,
c) a substantially spherical external contour,
d) a portion of pores of at least 15 % by volume, and
e) an average agglomerate size in the range of between 5 and 500 µm,
**characterized in that** the primary particles are joined to one another without additional binding agent.

2. Abrasive grit agglomerates according to claim 1, **characterized in that** the pores have an average diameter of less than 2,000 nm.

3. Abrasive grit agglomerates according to claim 1 or 2, **characterized in that** the pores have an average diameter of less than 1,000 nm, preferably between 100 and 300 nm.

4. Abrasive grit agglomerates according to any one of claims 1 to 3, **characterized in that** the abrasive grit agglomerates have an average primary particle diameter of less than 3 µm, preferably less than 1 µm, and in a particularly preferred manner less than 0.5 µm.

5. Abrasive grit agglomerates according to any one of claims 1 to 4, **characterized in that** the abrasive grit agglomerates have a bulk density of between 1.4 and 2.9 kg/l.

6. Abrasive grit agglomerates according to any one of claims 1 to 5, **characterized in that** the abrasive grit agglomerates have a specific surface (BET) of between 3 and 0.1 m²/g.

7. Abrasive grit agglomerates according to any one of claims 1 to 6, **characterized in that** the abrasive grit agglomerates have a content of aluminium oxide of at least 90 % by weight, preferably at least 98 % by weight.

8. Abrasive grit agglomerates according to any one of claims 1 to 7, **characterized in that** in addition to the aluminium oxide the abrasive grit agglomerates have an overall ratio of compounds of the group of elements W, Ti, Cr, Zr, Mg, Fe, Si, B, C, N up to a maximum of 20 % by weight, relative to the overall weight of the abrasive grit agglomerate.

9. A method of producing abrasive grit agglomerates according to any one of the preceding claims, comprising the steps:
a) wet grinding a calcinated clay in an agitator bead mill with grinding bodies of aluminium oxide and/or stabilized zirconium oxide,
b) spray drying or spray granulating the ground clay dispersion in order to produce green bodies of agglomerates and
c) sintering the green bodies of agglomerates in a temperature range of between 1300°C and 1750°C.

10. Use of abrasive grit agglomerates according to any one of claims 1 to 9 as lapping agents.

11. Use of abrasive grit agglomerates according to any one of claims 1 to 9 for the production of organically or inorganically bonded abrasive bodies.

12. Use of abrasive grit agglomerates according to any one of claims 1 to 9 in wear protection layers on the basis of inorganic, organic or elastomer composite systems, such as for example solvent-containing or water-based dyes, paints, powder paints or enamel for tiles, cooking pots and pans, as well as in impregnates in the production of wear-resistant surfaces for floor coverings, such as for example laminates, parquet or PVC or CV coverings as well as for furniture surfaces.

## Revendications

1. Agglomérés de grains abrasifs obtenus à partir de particules primaires à base d'oxyde d'aluminium avec :
a) une proportion d'oxyde d'aluminium d'au moins 80 % en poids,
b) un diamètre moyen des particules primaires inférieur à 5 µm,
c) un contour externe essentiellement sphérique,
d) une proportion de pores d'au moins 15 % en volume, et
e) une granulométrie moyenne des agglomérés située dans la plage comprise entre 5 et 500 µm,
**caractérisés en ce que**
les particules primaires sont liées entre elles sans liant supplémentaire.

2. Agglomérés de grains abrasifs conformes à la revendication 1,
**caractérisés en ce que**
les pores ont un diamètre moyen inférieur à 2000 nm.

3. Agglomérés de grains abrasifs conformes à la revendication 1 ou 2,
**caractérisés en ce que**
les pores ont un diamètre moyen inférieur à 1000 nm, de préférence compris entre 100 et 300 nm.

4. Agglomérés de grains abrasifs conformes à l'une des revendications 1 à 3,
**caractérisés en ce que**
les agglomérés de grains abrasifs ont un diamètre de particules primaires moyen de moins de 3 µm, de préférence de moins de 1 µm, et de façon particulièrement préférentielle de moins de 0,5 µm.

5. Agglomérés de grains abrasifs conformes à l'une des revendications 1 à 4,
**caractérisés en ce que**
les agglomérés de grains abrasifs ont une masse volumique apparente comprise entre 1,4 et 2,9 kg/l.

6. Agglomérés de grains abrasifs conformes à l'une des revendications 1 à 5,
**caractérisés en ce que**
les agglomérés de grains abrasifs ont une surface spécifique (BET) comprise entre 3 et 0,1 m²/g.

7. Agglomérés de grains abrasifs conformes à l'une des revendications 1 à 6,
**caractérisés en ce que**
les agglomérés de grains abrasifs ont une teneur en oxyde d'aluminium d'au moins 90 % en poids, de préférence d'au moins 98 % en poids.

8. Agglomérés de grains abrasifs conformes à l'une des revendications 1 à 7,
**caractérisés en ce que**
les agglomérés de grains abrasifs renferment outre de l'oxyde d'aluminium un pourcentage total de composés du groupe des éléments W, Ti, Cr, Zr, Mg, Fe, Si, B, C, N, au maximum de 20 % en poids par rapport au poids total des agglomérés de grains abrasifs frittés.

9. Procédé d'obtention d'agglomérés de grains abrasifs conformes à l'une des revendications précédentes, comportant les étapes suivantes :
a) moulage ou broyage par voie humide d'alumine calcinée dans un broyeur mélangeur à boulets avec des corps de broyage en oxyde d'aluminium et/ou en oxyde de zirconium stabilisé,
b) séchage par pulvérisation ou granulation par pulvérisation de la dispersion d'alumine broyée pour obtenir des corps verts d'agglomérés, et
c) frittage des corps verts d'agglomérés dans une plage de température comprise entre 1300°C et 1750°C.

10. Utilisation des agglomérés de grains abrasifs conformes à l'une des revendications 1 à 9 en tant qu'agent abrasif de rodage.

11. Utilisation des agglomérés de grains abrasifs conformes à l'une des revendications 1 à 9 pour l'obtention de corps abrasifs à liaison organique ou inorganique.

12. Utilisation d'agglomérés de grains abrasifs conformes à l'une des revendications 1 à 9 dans des couches de protection anti-usure à base de systèmes composites anorganiques, organiques ou élastomères, tels que par exemple des colorants renfermant des solvants ou à base d'eau, des laques, des laques pulvérulentes, ou des émaux pour des dalles, des casseroles et des poêles, ainsi que dans des produits d'imprégnation lors de la fabrication de surfaces résistant à l'usure pour des revêtements de sols tels que par exemple des laminés, des paquets et/ou des revêtements en PVC ou en CV, ainsi que pour des surfaces de meubles.
